# EUROPÄISCHE PATENTSCHRIFT

(11) **EP 0 902 228 B1**
(45) Veröffentlichungstag und Bekanntmachung des Hinweises auf die Patenterteilung: **14.08.2002**
(21) Anmeldenummer: 98116173.0
(22) Anmeldetag: 27.08.1998
(51) Int. Cl.: F16L 37/22

(54) **Rohrschnellkupplung**
Quick acting coupling
Raccord à action rapide

(30) Priorität: 13.09.1997 DE 19740356
(43) Veröffentlichungstag der Anmeldung: 17.03.1999
(73) Patentinhaber: FORD-WERKE AKTIENGESELLSCHAFT, 50725 Köln (DE); Ford Motor Company Limited, Brentwood, Essex CM13 3BY (GB); FORD FRANCE SOCIETE ANONYME, 92506 Rueil Malmaison Cedex (FR)
(72) Erfinder: Roesner, Thomas Wilhelm, 51429 Bensberg (DE); Boehme, Dietmar, 47259 Duisburg (DE); Kock, Cristof, 74101 Novy Jicln/ Skalky (CZ)
(74) Vertreter: Drömer, Hans-Carsten, Dipl.-Ing.

(56) Entgegenhaltungen:
- EP-A- 0 778 437
- US-A- 4 055 359
- US-A- 4 401 326
- US-A- 4 632 434
- US-A- 5 301 408

## Beschreibung

Die Erfindung bezieht sich auf eine Rohrschnellkupplung der im Oberbegriff des Patentanspruchs 1 erläuterten Art.

Aus der DE 26 52 207 C3 ist eine Rohrschnellkupplung zum dichtschließenden Verbinden zweier Rohre, mit einem an der Außenseite des einen Rohres angeordneten Käfig mit einer darin angeordneten ringförmigen Schraubenfeder bekannt, die dazu dient, bei axial ineinander geschobenen Rohren das zweite Rohr an einer Aufbördelung festzuhalten. Die Abdichtung zwischen den beiden ineinandergeschobenen Rohren erfolgt über eine Anordnung von O-Ringen und durch den bei der bekannten Rohrschnellkupplung axial an einem Rohr festgelegten Käfig sind die beiden Rohre auch gegen ein unbeabsichtigtes axiales Auseinanderziehen gesichert.

Rohrschnellkupplungen dieser Bauart werden in zunehmendem Maße bei Kraftfahrzeugen zum Verbinden der verschiedenen Rohrleitungen für das Kältemittel von Klimaanlagen verwendet und dementsprechend mußten bisher bei einer Vielzahl von Fahrzeugmodellen durch die erforderliche Anpassung an den Einbauraum eine Vielzahl von entsprechenden Rohrteilen mit den entsprechenden Rohrschnellkupplungen bevorratet werden.

Die Aufgabe der Erfindung geht von der Beobachtung aus, daß eine Vielzahl von derartigen zu bevorratenden Rohrbauteilen sich nur in geringen Längenabmessungen voneinander unterscheiden und daß die Anordnung dieser Rohrbauteile im Kraftfahrzeug in aller Regel so erfolgt, daß nach der erfolgten Montage mit dem erforderlichen Längenausgleich die Rohrbauteile derart festgelegt sind, daß ein unbeabsichtigtes axiales Auseinanderziehen kaum mehr möglich ist. Ein völliges Auseinanderziehen wird nach Erreichen des maximalen Längenausgleichs durch die Verdikkung des eintretenden Rohres vermindert.

Die der Erfindung zugrunde liegende Aufgabe besteht daher darin, die bekannte Rohrschnellkupplung derart umzuwandeln, daß mit ihrer Hilfe ein beträchtlicher Längenausgleich möglich ist.

Gemäß der Erfindung wird diese Aufgabe gelöst, indem eine Rohrschnellkupplung der im Oberbegriff des Patentanspruchs erläuterten Art die im Kennzeichenteil des Patentanspruches aufgezeigten Merkmale aufweist.

Dadurch, daß die erfindungsgemäße Rohrschnellkupplung einen beachtlichen Längenausgleich bei der Verbindung zweier Rohre ermöglicht, wird die Anzahl von z.B. für den Einbau einer Klimaanlage in einem Kraftfahrzeug zu bevorratenden unterschiedlichen Rohrbauteile um eine wesentliche Zahl verringert.

Die Erfindung wird anhand eines in der beiliegenden Zeichnung gezeigten Ausführungsbeispieles näher erläutert. Es zeigt:
- Fig. 1: eine Ansicht der beiden Rohrenden vor dem axialen Zusammenfügen und
- Fig. 2: zeigt die miteinander verbundenen Rohrenden bei eingerasteter ringförmiger Schraubenfeder.

Die Verbindung zweier Rohre besteht aus einem aufnehmenden Rohr 1, das an seinem freien Ende mit einer Aufbördelung 2 versehen ist, ggf. kann das Rohr 1 in seinem weiteren Verlauf mit einer Einschnürung 3 versehen sein.

Das eintretende Rohr 4 ist an seinem freien Ende mit einer Verdickung 5 versehen, in der Aufnahmenuten 6, zumeist durch einen besonderen Stauchvorgang hergestellt, für herkömmliche O-Ring-Dichtungen 7 angeordnet sind.

Der Außendurchmesser der Verdickung 5 paßt mit einem Schiebesitz in den Innendurchmesser des aufnehmenden Rohres 1 hinein.

Ausgehend vom Ende des eintretenden Rohres 4 nachfolgend dessen Verdickung 5 ist am Rohr 4 ein Käfig 8 angeordnet, der in bekannter Weise eine ringförmige Schraubenfeder 9 aufnimmt. Der ringförmige Käfig 8 weist hierbei eine Eintrittsöffnung 10 auf, deren Durchmesser den ungehinderten Eintritt der Aufbördelung 2 des aufnehmenden Rohres 1 ermöglicht. Der andere Durchmesser 11 des ringförmigen Käfigs 8 ist nur geringfügig größer als der Außendurchmesser des Rohres 4 und ist auf diesem lose verschiebbar angeordnet.

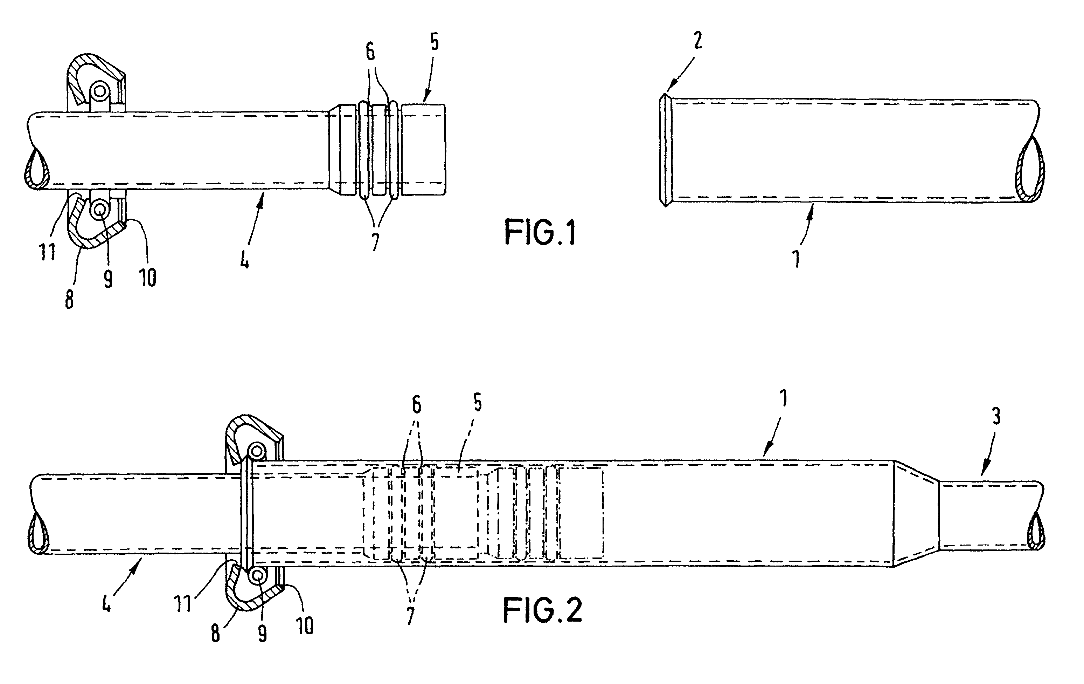

Sobald die beiden Rohre 1 und 4 wie aus Fig. 2 ersichtlich axial ineinandergeschoben sind, kann sich die Verdickung 5 in verschiedenen axialen Positionen (Eine Position ist in gestrichelten Linien und eine mögliche andere Position ist in Strich-Punkt-Linien angedeutet.), innerhalb des aufnehmenden Rohres 1 befinden und durch Aufschieben des ringförmigen Käfigs 8 über die Aufbördelung 2 des Rohres 1 wird insofern eine Verriegelung der beiden Rohre 1 und 4 erreicht, indem nunmehr der ringförmige Käfig 8 durch die nach außen aufgeweitete ringförmige Schraubenfeder 9 untrennbar (ohne Spezialwerkzeug) mit dem Rohr 1 verbunden ist. Darüber hinaus ist ein völliges Auseinanderziehen durch zur Anlage kommen des Käfigs 8 an der Verdickung 5 sicher verhindert.

Eine ungewollte Längenänderung der beiden Rohre kann durch den im Patent DE 19 513 058 C2 erwähnten Sicherungsclip verhindert werden.

## Patentansprüche

1. Rohrschnellkupplung zum dichtschließenden Verbinden zweier Rohre, enthaltend
- ein erstes Rohr (1) mit einer Aufbördelung (2) am Ende;
- ein zweites Rohr (4), welches axial in das erste Rohr (1) eingeschoben werden kann;
- einen an der Außenseite des zweiten Rohres (4) angeordneten ringförmigen Käfig (8), in dem eine ringförmige Schraubenfeder (9) angeordnet ist, die bei axial ineinandergeschobenen Rohren (1 und 4) über die Aufbördelung (2) rastet;
- eine Dichtungsanordnung in Form von Ringnuten (6) und O-Ring-Dichtungen (7), die in einer radial nach außen gerichteten Verdickung (5) des zweiten Rohres (4) vorgesehen ist;
**dadurch gekennzeichnet, dass** der minimale Durchmesser des ringförmigen Käfigs (8) so groß ist, dass der Käfig auf dem Außenumfang des zweiten Rohres (4) axial lose verschiebbar ist, jedoch nicht über die Verdickung (5) des zweiten Rohres passt.

## Claims

1. Quick-acting pipe coupling for the sealing connection of two pipes, comprising
- a first pipe (1) having a flange (2) at the end;
- a second pipe (4), which can be inserted axially into the first pipe (1);
- an annular cage (8) disposed on the outside of the second pipe (4) and in which is disposed an annular helical spring (9) which locks over the flange (2) when the pipes (1 and 4) are joined by axial insertion;
- a sealing arrangement in the form of annular grooves (6) and O-ring seals (7), which is provided in a radially outward-directed thickening (5) of the second pipe (4)
**characterized in that** the minimum diameter of the annular cage (8) is so dimensioned that the cage is loosely displaceable axially on the outer circumference of the second pipe (4) but does not fit over the thickening (5) of the second pipe.

## Revendications

1. Raccord à action rapide pour la connexion à fermeture étanche de deux tubes, comprenant :
- un premier tube (1) avec un rebord (2) à l'extrémité ;
- un deuxième tube (4), qui peut être poussé axialement dans le premier tube (1) ;
- une cage annulaire (8) disposée sur le côté extérieur du deuxième tube (4), dans laquelle est disposé un ressort à boudin annulaire (9) qui s'imbrique par-dessus le rebord (2) lorsque les tubes (1 et 4) sont enfoncés l'un dans l'autre axialement;
- un agencement de joint d'étanchéité en forme de rainures annulaires (6) et de joints toriques (7), qui est prévu dans un épaississement (5) orienté radialement vers l'extérieur du deuxième tube (4) ;
**caractérisé en ce que** le diamètre minimal de la cage annulaire (8) est suffisamment grand pour que la cage puisse être poussée lâchement axialement sur la périphérie extérieure du deuxième tube (4), mais ne passe pas par-dessus l'épaississement (5) du deuxième tube.
